(19) **Europäisches Patentamt / European Patent Office / Office européen des brevets**

(11) **EP 1 190 544 B1**

(12) **EUROPÄISCHE PATENTSCHRIFT**

(45) Veröffentlichungstag und Bekanntmachung des Hinweises auf die Patenterteilung:
**12.09.2007 Patentblatt 2007/37**

(51) Int Cl.:
***H04L 27/38*** *(2006.01)*

(21) Anmeldenummer: **00931510.2**

(22) Anmeldetag: **08.06.2000**

(86) Internationale Anmeldenummer:
**PCT/IB2000/000809**

(87) Internationale Veröffentlichungsnummer:
**WO 2000/079754 (28.12.2000 Gazette 2000/52)**

(54) **PHASENFEHLERDETEKTOR FÜR EINEN QAM-EMPFÄNGER**

PHASE ERROR DETECTOR FOR A QUADRATURE AMPLITUDE MODULATED (QAM) RECEIVER

DETECTEUR D'ERREURS DE PHASE POUR RECEPTEUR A MODULATION D'AMPLITUDE EN QUADRATURE DE PHASE

(84) Benannte Vertragsstaaten:
**AT BE CH CY DE DK ES FI FR GB GR IE IT LI LU MC NL PT SE**

(30) Priorität: **19.06.1999 DE 19928206**

(43) Veröffentlichungstag der Anmeldung:
**27.03.2002 Patentblatt 2002/13**

(73) Patentinhaber: **Ericsson AB
Stockholm (SE)**

(72) Erfinder: **HERBIG, Gerhard
D-71570 Oppenweiler (DE)**

(74) Vertreter: **Pellkofer, Dieter et al
Manitz, Finsterwald & Partner GbR
Martin-Greif-Strasse 1
80336 München (DE)**

(56) Entgegenhaltungen:
**EP-A- 0 571 788          US-A- 4 811 363**

- **HOFFMANN M H W: "A NEW CARRIER REGENERATION SCHEME FOR QAM SIGNALS" PROCEEDINGS OF THE INTERNATIONAL SYMPOSIUM ON CIRCUITS AND SYSTEMS, 7. Juni 1988 (1988-06-07), Seiten 599-602, XP000013938 US, NEW YORK ,YK ISBN: 951-721-239-9**

## Beschreibung

Stand der Technik

Die vorliegende Erfindung betrifft einen Phasenfehlerdetektor für einen QAM-Empfänger, in dem alle vorkommenden QAM-Signalzustände abgespeichert sind und dabei jeder der in einer komplexen Signalzustandsebene liegenden QAM-Signalzustände von einem Entscheidergebiet umgeben ist und der Phasenfehlerdetektor durch Schwellwertentscheidungen detektiert, in welches Entscheidergebiet welchen QAM-Signalzustandes ein komplexes in seine Inphasen- und seine Quadaturphasen-Signalkomponente zerlegter Empfangssignalzustand fällt, und er in Abhängigkeit vom detektierten Entscheidergebiet ein Phasenkorrektursignal für die Trägerphase des Empfangssignals bildet. Ein solcher Phasenfehlerdetektor ist aus der DE 36 19 744 A1 bekannt.

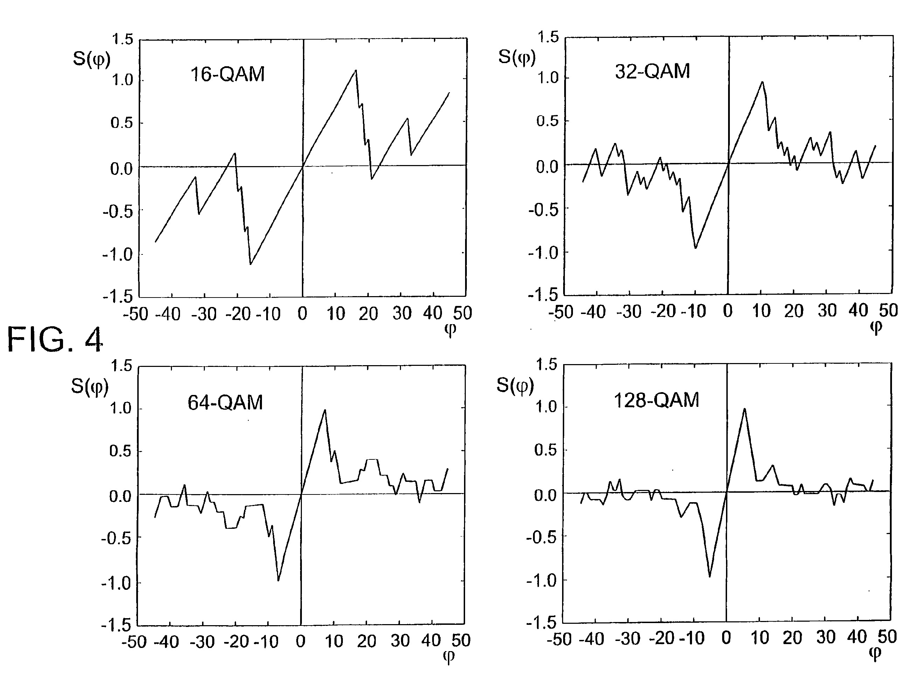

Standardmäßig verwendete Phasenfehlerdetektoren für QAM (guadraturamplitudenmodulierte) Signale, von denen auch in der DE 36 19 744 A1 ausgegangen wird, besitzen neben dem Soll-Einrastpunkt bei einem Phasenfehler von $\varphi = 0$ weitere unerwünschte Nullstellen in ihrer Phasenkennlinie, welche zu verlängerten Synchronisationszeiten wie auch zur Synchronisation bei ungeeigneten Phasen führen können. In der Figur 4 sind beispielhaft Phasenkennlinien von solchen Standard-Phasenfehlerdetektoren für 16-QAM, 32-QAM, 64-QAM und 120-QAM dargestellt, welche außer beim Einrastpunkt $\varphi = 0$ mehrere unerwünschte Nullstellen aufweisen. In der DE 36 19 744 A1 ist ein Algorhitmus für einen Phasenfehlerdetektor beschrieben, dessen Phasenkennlinie nicht mehr die störenden Nullstellen aufweist. Das in der DE 36 19 744 A1 beschriebene Verfahren besitzt jedoch Eigenschaften, welche sich in praktischen Systemen als nachteilig erwiesen haben. Die Steigung der statischen Phasenkennlinie ist ein wichtiger Dimensionierungsparameter für die Phasenregelschleife der Trägerrückgewinnung in einem QAM-Empfänger. Bei dem bekannten Verfahren ist die Steigung der statischen Phasenkennlinie im Einrastpunkt stark vom Rauschabstand des Empfangssignals abhängig; sie ist klein bei schlechtem Rauschabstand und strebt gegen unendlich bei gutem Rauschabstand. Diese starke Variation der Steigung der Phasenkennlinie macht eine gute Dimensionierung nur mit hohen Kompromissen möglich. Außerdem besitzen auch alle anderen standardmäßig verwendeten Phasenfehlerdetektoren, welche auf Signum-Operationen des Entscheiderfehlers beruhen, diese Eigenschaft.

Im übrigen machen die von bekannten Phasenfehlerdektektoren gebildete statische Phasenkennlinien lediglich eine Aussage bezüglich des mittleren Verhaltens eines Phasenfehlerdetektors. Beim Einrasten einer Phasenregelschleife, also beim Übergang von der Einrastphase zur Nachführphase, spielt aber nicht so sehr das Verhalten im Mittel eine Rolle, sondern vielmehr ein gleichmäßig guter Beitrag aller QAM-Signalzustände.

Aus dem Artikel "'A new carrier regeneration scheme for QAM signals" von M. H. W. Hoffmann, veröffentlicht am 7. Juni 1988 auf Seiten 599-602 der IEEE International Symposium on Circuits and Systems, ist ein weiteres Verfahren zur Erkennung von Phasenfehlern in QAM-Signalen beschrieben.

Der Erfindung liegt nun die Aufgabe zugrunde, einen Phasenfehlerdetektor der eingangs genannten Art anzugeben, der ein Phasenkorrektursignal so erzeugt, daß seine Phasenkennlinie keine unerwünschten Nullstellen aufweist.

Vorteile der Erfindung

Die genannte Aufgabe wird mit den Merkmalen des Anspruchs 1 dadurch gelöst, daß dem Phasenfehlerdetektor für die Berechnung des Phasenkorrektursignals mehrere Algorithmen zur Verfügung stehen. Welcher von den zur Verfügung stehenden Algorithmen für die Berechnung des Phasenkorrektursignals ausgewählt wird, hängt davon ab, in welches Entscheidergebiet der komplexen QAM-Signalzustandsebene ein in seine Inphasen- und seine Quadraturphaser-Signalkomponente zerlegter Empfangssignalzustand fällt. Im Anspruch 1 sind fünf verschiedene Algorithmen für die Berechnung des Phasenkorrektursignals angegeben. Dadurch, daß nicht wie beim Stand der Technik für alle Entscheidergebiete das Phasenkorrektursignal nach ein und demselben Algorithmus berechnet wird, sondern unterschiedliche Algorithmen zur Verfügung stehen, läßt sich eine Phasenkennlinie realisieren, die einerseits keine unerwünschten Nullstellen mehr aufweist und andererseits einen gleichmäßigen Beitrag aller QAM-Signalzustände garantiert. Welcher Algorithmus für welches Entscheidergebiet der geeignetste ist, läßt sich empirisch ermitteln.

Vorteilhafte Weiterbildungen der Erfindung gemäß Anspruch 1 gehen aus den Unteransprüchen hervor.

Zeichnung

Anhand eines in der Zeichnung dargestellten Ausführungsbeispiels wird nachfolgend die Erfindung näher erläutert. Es zeigen:

Figur 1 ein Blockschaltbild eines QAM-Empfängers,
Figur 2 eine komplexe QAM-Signalzustandsebene,
Figur 3 mehrere Phasenkennlinien von erfindungsgemäß ausgeführten Phasendetektoren und

Figur 4 mehrere Phasenkennlinien von Standard-Phasenfehlerdetektoren.

Beschreibung eines Ausführungsbeispiels

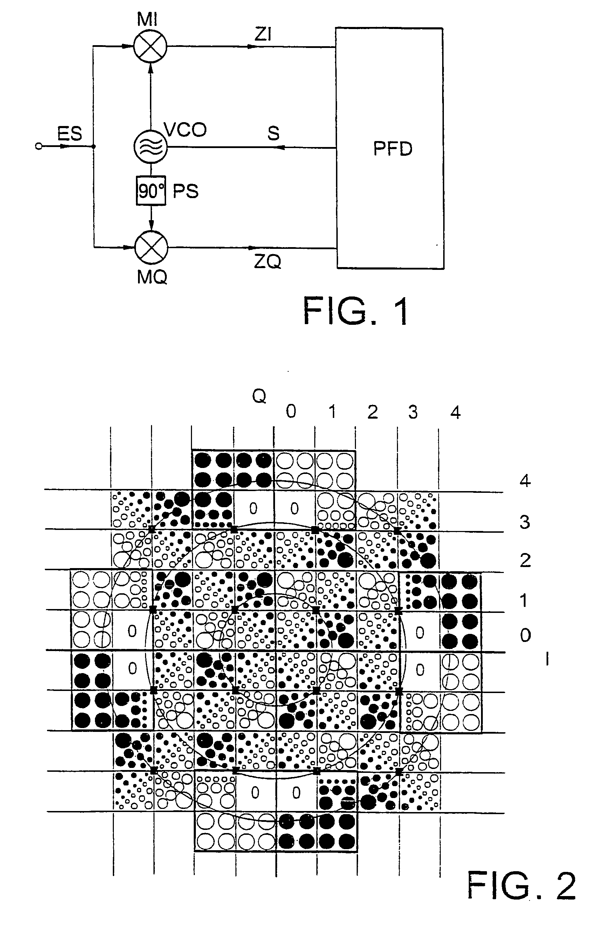

In der Figur 1 ist ein prinzipielles Blockschaltbild eines QAM-Empfängers dargestellt. Der QAM-Empfänger besteht aus einem Inphasen-Signalzweig und einem Quadraturphasen-Signalzweig. Im Inphasen-Signalzweig befindet sich ein Mischer MI und im Quadraturphasen-Signalzweig ein Mischer MQ. Diese beiden Mischer MI und MQ setzen das Empfangssignal ES, das auf die beiden Signalzweige aufgeteilt wird, ins Basisband um. Die Referenzfrequenz für die beiden Mischer MI und MQ wird von einem spannungsgesteuerten Oszillator VCO geliefert. Einem der beiden Mischer wird das vom spannungsgesteuerten Oszillator VCO erzeugte Referenzfrequenzsignal einem 90°-Phasenschieber PS zugeführt, so daß die Referenzfrequenzen für die beiden Mischer MI und MQ eine gegenseitige Phasenablage von 90° aufweisen. Das Ausgangssignal des Mischers MI, das die Inphasen-Signalkomponente ZI eines Empfangssignalzustandes darstellt, und das Ausgangssignal des Mischers MQ, das die Quadraturphasen-Signalkomponente ZQ eines Empfangssignalzustandes darstellt, werden einem Phasenfehlerdetektor PFD zugeführt. Dieser Phasenfehlerdetektor PFD, erzeugt, wie nachfolgend noch detailliert beschrieben, ein Phasenkorrektursignal S, das als Steuersignal für den spannungsgesteuerten Oszillator VCO dient.

Anhand der nachfolgenden Gleichungen soll verdeutlicht werden, wie der Phasenfehlerdetektor aus den einzelnen Empfangssignalzuständen mit der Inphasen-Signalkomponente ZI und der Quadraturphasen-Signalkomponente ZQ das Phasenkorrektursignal S, das die Ablage der Trägerphase des Empfangssignals gegenüber der Phase des vom spannungsgesteuerten Oszillator VCO erzeugten Referenzfrequenzsignals darstellt, ermittelt. Der Phasenfehlerdetektor PFD berechnet nach einer weit verbreiteten Methode das Phasenkorrektursignal S gemäß der Gleichung (1).

$$S = FQ\ ZI - FI\ ZQ \qquad (1)$$

Dabei sind FI und FQ Entscheiderfehler, die, wie die Gleichung (2) ausdrückt, die Ablagen der Inphasen-Signalkomponente ZI und der Quadraturphasen-Signalkomponente ZQ des Empfangssignalzustandes gegenüber der Inphasen-Komponente AI und der Quadraturphasen-Komponente AQ desjenigen QAM-Signalzustandes sind, für den der Phasenfehlerdetektor PFD entschieden hat, daß dieser der von einem Sender abgegebene Sendesignalzustand ist.

$$FI = ZI - AI$$
$$FQ = ZQ - AQ \qquad (2)$$

Bei einer Übertragung des Sendesignal zustands ohne Verzerrungen ist der Empfangssignalzustand Z = ZI + jZQ lediglich um einen Winkel φ gegenüber dem Sendesignalzustand A = AI + jAQ verdreht. Dies drückt die Gleichung (3) aus.

$$Z = A e^{j\varphi} = (AI + jAQ)\ (\cos\varphi + j\sin\varphi) \qquad (3)$$

Häufig wird zur Berechnung des Phasenkorrektursignals nicht die in Gleichung (1) angegebene Funktion sondern die Signumsversion gemäß Gleichung (4) verwendet, welche keine aufwendigen Multiplikationen benötigt.

$$S = FQ\ \text{sign}(ZI) - FI\ \text{sign}(ZQ) \qquad (4)$$

Die statische Phasenkennlinie ist der Mittelwert über alle möglichen QAM-Sendesignalzustände, wie in Gleichung (5) angegeben.

$$S(\varphi) = E \, (FQ \, \text{sign}(ZI) - FI \, \text{sign}(ZQ)) \qquad (5)$$

Wegen Gleichung (2) gilt für die Quadraturkomponenten des Entscheiderfehlers:

$$FI = AI \, \cos\varphi - AQ \, \sin\varphi - AI$$
$$FQ = AQ \, \cos\varphi - AI \, \sin\varphi - AQ \qquad (6)$$

Mit (6) gilt für das Phasenkorrektursignal S gemäß (1).

$$S = (AQ \, \cos\varphi + AI \, \sin\varphi - AQ) \, (AI \, \cos\varphi - AQ \, \sin\varphi) -$$
$$(AI \, \cos\varphi - AQ \, \sin\varphi - AI) \, (AQ \, \cos\varphi + AI \, \sin\varphi) \qquad (7)$$

Mit diesem Phasenkorrektursignal erhält man mit $E \langle A^2 \rangle = 1$ eine statische Phasenkennlinie gemäß Gleichung (8).

$$S(\varphi) \approx - \cos\varphi \, \sin\varphi + \sin\varphi \, \cos\varphi + \sin\varphi$$
$$- \cos\varphi \, \sin\varphi + \sin\varphi \, \cos\varphi + \sin\varphi = 2 \, \sin\varphi \qquad (8)$$

Diese Berechnung der statischen Phasenkennlinie unterstellt allerdings die Gültigkeit der Gleichung (2), also eine fehlerfreie Zuordnung der Empfangssignalzustände zu Sendesignalzuständen. Für QAM-Signalkonstellationen bedeutet dies einen eingeschränkten und vom Modulationsverfahren abhängigen Gültigkeitsbereich der Phasenkennlinie gemäß Gleichung (8), beispielsweise [-45°, + 45°] für 4-QAM, [-16,5°, + 16,5°] für 16-QAM usw.

Phasenkennlinien entsprechend der Signumversion nach Gleichung (4) besitzen im Gültigkeitsbereich keinen sinusförmigen sondern einen linearen Verlauf. In der Figur 4 sind Phasenkennlinien für 16-QAM, 32-QAM, 64-QAM und 128-QAM Empfänger dargestellt, welche das Phasenkorrektursignal standardgemäß nach Gleichung (5) berechnen. Bei allen vier Modulationsverfahren sind unerwünschte Nullstellen, d.h. falsche Einrastpunkte vorhanden; am deutlichsten sind sie bei 22-QAM erkennbar. Bei diesem Modulationsverfahren werden auch die längsten Verweildauern in unerwünschten Phasenlagen festgestellt.

Um die unerwünschten Nulldurchgänge in der Phasenkennlinie zu vermeiden, stehen dem Phasenfehlerdetektor fünf verschiedene Berechnungsmethoden für das Phasenkorrektursignal zur Verfügung:

$$S1 = FQ \, f(ZI) - FI \, f(ZQ)$$
$$S2 = \pm 2 \, FQ \, f(ZI)$$
$$S3 = \pm 2 \, FI \, f(ZQ) \qquad (9)$$
$$S4 = \pm 2 \, ZI \, ZQ$$
$$S5 = 0$$

In den vier Berechnungsmethoden S1 bis S4 kann für die Funktionen f (ZI) und f (ZQ) gelten:

f(ZI) = ZI und f(ZQ) = ZQ
oder
f(ZI) = sign(ZI) und f(ZQ) = sign(ZQ)

In welchem Fall welche der fünf Berechnungsmethoden S1 bis S5 für das Phasenkorrektursignal vom Phasenfehlerdetektor verwendet wird, hängt davon ab, in welches Entscheidergebiet welchen QAM-Signalzustandes ein komplexer in seine Inphasen-Signalkomponente ZI und seine Quadraturphasen-signalkomponente ZQ zerlegter Empfangssignalzustand fällt.

Bei der Zuordnung der Berechnungsmethoden S1 bis S5 zu den einzelnen Entscheidergebieten werden die Anteile aller Sendesymbole an der statischen Phasenkennlinie einzeln betrachtet. So gibt es z. B. bei einer 16-QAM Modulation genau 16 verschiedene Sendesymbole A(i), i = 1...16, und dami 16 Anteile S(i), welche im Mittel dann die statische Phasenkennlinie S bilden:

$$S = \frac{1}{16} \sum_{i=1}^{16} S(i) \qquad (10)$$

Um für die Phasenkenlinie S einen günstigen Verlauf zu erhalten, werden in einem ersten Schritt diejenigen Sendesymbole A(i) identifiziert, welche für positive Winkel $\varphi > 0$ einen negativen Bereich S(i)<0 besitzen oder für negative Winkel einen positiven Bereich. Hierbei wird zunächst für alle Entscheidergebiete die Methode S1, also die Standardmethode, unterstellt. Diese Bereiche führen dann in Gleichung (10) zu den unerwünschten Nullstellen im Gesamtverhalten der Phasenkorrekturkennlinie S. In einem zweiten Schritt werden dann diejenigen Entscheidergebiete ermittelt, die bei dem entsprechenden Sendesymbol A(i) die unerwünschte Korrekturinformation liefern. In einem dritten Schritt kann schließlich getestet werden, ob eine der Methoden S2 oder S3 eine gewünschte Verbesserung bring. Nach Bearbeitung aller Sendesymbole und aller Entscheidergebiete wird sich in der Regel eine Verbesserung des Verlaufs der Phasenkennlinie eingestellt haben. Es kann aber sein, daß die Verbesserung aber noch unzureichend ist. Für die verbleibenden Bereiche S(i)<0 für $\varphi > 0$ respektive S(i)>0 für $\varphi < 0$ werden dann die Methoden S4 und S5 eingesetzt, wobei aber nur soviele Entscheidergebiete ausgewählt werden, bis die unerwünschten Nullstellen in der Phasenkennlinie zuverlässig verschwunden sind. Die Methoden S4 und S5 werden deshalb so zurückhaltend eingesetzt, weil sie eine - wenn auch geringfügige - Deformation der statischen Phasenkennlinie im Einrastpunkt bewirken. Das hier beschriebene Verfahren wird zweckmäßigerweise rechnergestützt durchgeführt, wobei aber auch einige Entscheidungen empirisch zu fällen sind.

In der Figur 2 ist beispielsweise die komplexe Signalzustandsebene eines 16-QAM-Systems dargestellt. Auf der Abszisse des Koordinatensystems der komplexen QAM-Signalzustandsebene laufen die Indizes I der Inphasen-Signalkomponente von 0 bis 4 und auf der Ordinate des Koordinatensystems laufen die Indizes Q der Quadraturphasen-Signalkomponenten ebenfalls von 0 bis 4. Die sechzehn quadratischen Punkte in der Signalzustandsebne entsprechen den 16-QAM-Sendesignalzuständen, und die drei dünnen konzentrischen Kreise, auf denen die quadratischen Punkte liegen, sind die Spuren der Empfangssignalzustände bei fehlender Trägerphasensynchronisation. Die Quadrate, welche die Signalzustände (quadratische Punkte) umgeben, werden als Entscheidergebiete bezeichnet. Der Phasenfehlerdetektor PFD ermittelt nämlich durch Schwellwertentscheidung, in welches Entscheidergebiet welchen QAM-Signalzustandes ein komplexes in seine Inphasen-Signalkomponente ZI und in seine Quadratur-Signalkomponente ZQ zerlegter Empfangssignalzustand fällt. Die Richtung und die Stärke der vom Phasenfehlerdetektor berechneten Phasenkorrekturinformation wird durch die Farbe (schwarz, weiß) und die Größe der in Figur 2 eingezeichneten Kreise dargestellt. Schwarze Kreise bewirken eine Phasenkorrektur in positiver Richtung (entgegen dem Uhrzeigersinn) und weiße Kreise in negativer Richtung (im Uhrzeigersinn). Große Kreise entsprechen einer starken Korrektur, kleine Kreise einer schwachen Korrektur. In den acht mit 0 gekennzeichneten Feldern wird überhaupt keine Korrekturinformatioon erzeugt (entspricht der Methode S5).

Die dick umrandeten Entscheidergebiete in Figur 2 erfahren gegenüber der bekannten standardisierten Phasenfehlerdetektion eine Modifikation. Für sie werden nämlich unterschiedliche Berechnungsmethoden gemäß Gleichung (9) für das Phasenkorrektursignal angewendet. Die Indizes I und Q, welche die Lage der Entscheidergebiete beschreiben, sind in der nachfolgenden Tabelle im Abschnitt 16-QAM wiedergegeben. Außerdem ist zu jedem Entscheidergebiet, also zu jeder Kombination I/Q, die aus den fünf Rechenmethoden S1 bis S5 ausgewählte Rechenmethode aufgeführt. Dort wird beispielsweise für die Entscheidergebiete 0/3 und 3/0 der Wert 0 gefordert, das entspricht der Methode S5. In den Gebieten 0/4, 1/4, 4/0 und 4/1 ist die Korrekturinformation konstant; das entspricht der Berechnungsmethode S4. In den beiden Entscheidergebieten 1/3 und 3/1 ist die Phasenkorrekturinformation nur von einem Entscheiderfehler FI oder FQ abhängig, was in der Figur 2 durch eine achsenparallele Orientierung der Punktgröße zum Ausdruck kommt; hier kommen die Berechnungsmethoden S2 und S3 zum Tragen.

Warum die vorangehend beschriebene Auswahl aus verschiedenen Berechnungsmethoden S1 bis S5 für das Phasenkorrektursignal eine Verbesserung der statischen Phasenkennlinie unerwünschter Nullstellen bringt, kann folgendermaßen erklärt werden:

Die vier äußeren Entscheidergebiete 0/4, 1/4, 4/0 und 4/1 sind eindeutig in der Phasenkorrekturinformation. Es macht daher Sinn, für diese Fälle den maximalen durch den Aussteuerbereich festgelegten Wert zu wählen. Allerdings dürfen nicht alle Entscheidergebiete, deren Korrekturinformation eindeutig ist, auf diese Weise behandelt werden, denn der Verlauf der statischen Phasenkennlinie soll in der Nähe des Ursprungs so wenig wie möglich verfälscht werden (endliche Steigung der Phasenkennlinie im Einrastpunkt $\varphi = 0$). Aus diesem Grund bleiben beispielsweise die Gebiete 0/1 und 1/0 unverändert.

Die Bereiche 0/3 und 3/0 liefern für bestimmte Phasen falsche Korrekturinformationen, da auf dem mittleren Kreis eine hohe Unsicherheit bezüglich des tatsächlich gesendeten Signalzustandes besteht. Die Ausblendung dieser Entscheidergebiete ist zwingend, Dementsprechend sind diese Bereiche in der Figur 2, für die die Berechnungsmethode S5 in Frage kommt, mit einer Null gekennzeichnet.

Die beiden Gebiete 1/3 und 3/1 werden entweder in der Einrastphase von einem rotierenden Eckpunkt oder in der Nachführphase von einem benachbarten verrauschten Empfangssignalzustand getroffen. Im ersten Fall liefern diese Entscheidergebiete eine korrekte Phasenkorrekturinformation und im zweiten Fall eine unbedeutende. Damit diese Entscheidergebiete also im ersten Fall eine möglichst hohe und im zweiten Fall eine möglichst geringe Phasenkorrekturinformation liefern, wird jeweils nur eine Quadraturkomponente FI oder FQ des Entscheiderfehlers gemäß den Berechnungsmethoden S2 oder S3 ausgewertet.

Der nachfolgenden Tabelle können ebenfalls für 32-QAM, 64-QAM und 128-QAM Systeme die Zuordnungen der Entscheidergebiete zu den einzelnen Berechnungsmethoden S1 bis S5 entnommen werden.

16-QAM

| Index I | Index Q | Methode |
|---|---|---|
| 3 | 0 | S5 |
| 0 | 3 | S5 |
| 3 | 1 | S3 |
| 1 | 3 | S2 |
| 4 | 0 | S4 |
| 0 | 4 | S4 |
| 4 | 1 | S4 |
| 1 | 4 | S4 |
| Alle übrigen | Alle übrigen | S1 |

32-QAM

| Index I | Index Q | Methode |
|---|---|---|
| 3 | 0 | S5 |
| 0 | 3 | S5 |
| 4 | 0 | S3 |
| 0 | 4 | S2 |
| 4 | 2 | S3 |
| 2 | 4 | S2 |
| 5 | 1 | S3 |
| 1 | 5 | S2 |
| 5 | 2 | S4 |
| 2 | 5 | S4 |
| Alle übrigen | Alle übrigen | S1 |

64-QAM

| Index I | Index Q | Methode |
|---|---|---|
| 3 | 0 | S5 |
| 0 | 3 | S5 |
| 4 | 0 | S3 |
| 0 | 4 | S2 |
| 4 | 2 | S3 |
| 2 | 4 | S2 |
| 5 | 1 | S3 |
| 1 | 5 | S2 |
| 5 | 2 | S4 |
| 2 | 5 | S4 |
| 7 | 3 | S3 |
| 3 | 7 | S2 |
| 8 | 2, 3, 4, 5 | S4 |
| 2, 3, 4, 5 | 8 | S4 |
| 9 | 0, 1, 2, 3, 4 | S4 |
| 0, 1, 2, 3, 4 | 9 | S4 |
| Alle übrigen | Alle übrigen | S1 |

128-QAM

| Index I | Index Q | Methode |
|---|---|---|
| 3 | 0 | S5 |
| 0 | 3 | S5 |
| 4 | 0 | S3 |
| 0 | 4 | S2 |
| 4 | 2 | S3 |
| 2 | 4 | S2 |
| 5 | 1 | S3 |
| 1 | 5 | S2 |
| 5 | 2 | S4 |
| 2 | 5 | S4 |
| 7 | 3 | S3 |
| 3 | 7 | S2 |
| 8 | 5 | S5 |
| 5 | 8 | S5 |
| 9 | 3 | S3 |
| 3 | 9 | S2 |
| 9 | 7 | S5 |

(fortgesetzt)

| Index I | Index Q | Methode |
|---|---|---|
| 7 | 9 | S5 |
| 9 | 8 | S5 |
| 8 | 9 | S5 |
| 10 | 2 | S5 |
| 2 | 10 | S5 |
| 10 | 7 | S5 |
| 7 | 10 | S5 |
| 10 | 8 | S5 |
| 8 | 10 | S5 |
| 11 | 5 | S3 |
| 5 | 11 | S2 |
| 11 | 6 | S4 |
| 6 | 11 | S4 |
| 12 | 3 | S4 |
| 3 | 12 | S4 |
| 12 | 4 | S4 |
| 4 | 12 | S4 |
| Alle übrigen | Alle übrigen | 1 |

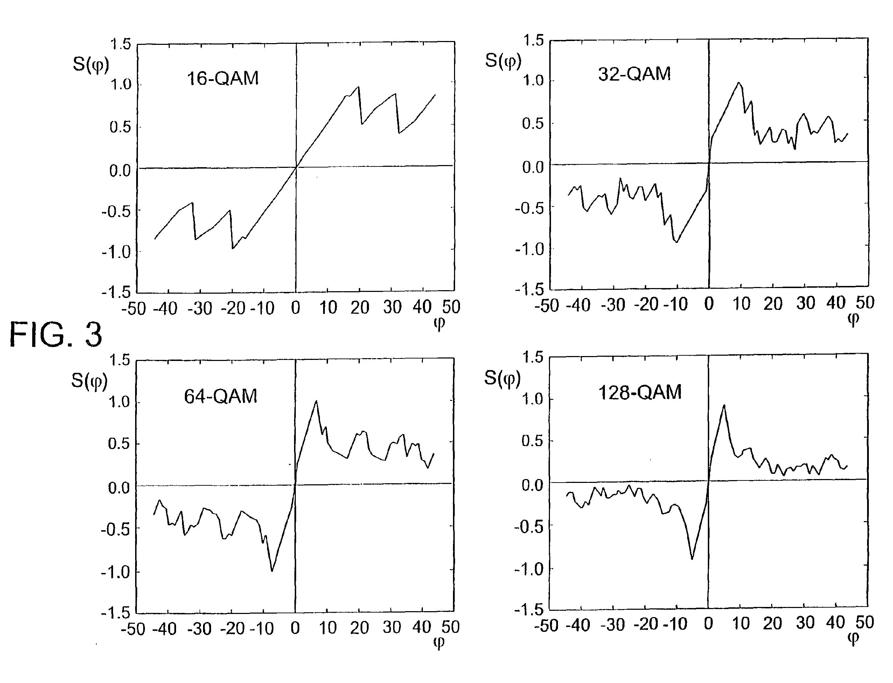

Mit den dargestellten Zuordnungen der verschiedenen Berechnungsmethoden S1 bis S5 für das Phasenkorrektursignal ergeben sich für das 16-QAM, das 32-QAM, das 64-QAM und das 128-QAM-System die in der Figur 3 dargestellten Phasenkennlinien, die einen im Einrastpunkt $\varphi = 0$ unveränderten Verlauf haben und keine unerwünschten Nullstellen mehr aufweisen.

**Patentansprüche**

1. Phasenfehlerdetektor für einen QAM-Empfänger, in dem alle vorkommenden QAM-Signalzustände abgespeichert sind und dabei jeder der in einer komplexen Signalzustandsebene liegenden QAM-Signalzustände von einem Entscheidergebiet umgeben ist und der Phasenfehlerdetektor durch Schwellwertentscheidungen detektiert, in welches Entscheidergebiet welchen QAM-Signalzustandes ein komplexes in seine Inphasen (ZI) und seine Quadraturphasen-Signalkomponente (ZQ) zerlegter Empfangssignalzustand fällt, und er in Abhängigkeit vom detektierten Entscheidergebiet ein Phasenkorrektursignal (S) für die Trägerphase des Empfangssignals (ES) bildet, **dadurch gekennzeichnet,**

    - **daß** der Phasenfehlerdetektor (PFD) das Phasenkorrektursignal (S) je nach detektiertem Entscheidergebiet nach einem der folgenden Methoden berechnet:

$$S1 = FQ\ f(ZI) - FI\ f(ZQ)$$

$$S2 = \pm\ 2\ FQ\ f(ZI)$$

$$S3 = \pm\ 2\ FI\ f(ZQ)$$

$$S4 = \pm 2 \; ZI \; ZQ$$

$$S5 = 0,$$

wobei ZI und ZQ die Inphasen- und die Quadraturphasen-signalkomponente des Empfangssignalzustands sind und FI und FQ die Ablagen von ZI und ZQ gegenüber der Inphasen- und Quadraturphasen-Komponente des entschiedenen QAM-Signalzustandes sind,
- und **daß** der Phasenfehlerdetektor (PFD) eine solche Zuordnung zwischen den Entscheidergebieten und den einzelnen Berechnungsmethoden (S1 bis S5) trifft, daß seine statische Phasenkennlinie außer beim Einrastpunkt, in dem die Phasenablage zwischen dem Referenzträger des Empfängers und dem Empfangssignalträger 0 ist, keine weitere Nullstelle aufweist.

2. Phasenfehlerdetektor nach Anspruch 1, **dadurch gekennzeichnet, daß** für die Berechnungsmethoden (S1 bis S3) gilt: f(ZI) = ZI und f (ZQ) = ZQ.

3. Phasenfehlerdetektor nach Anspruch 1, **dadurch gekennzeichnet, daß** für die Berechnungsmethoden S1 bis S5 gilt: f(ZI) = sign(ZI) und f (ZQ) = sign(ZQ).

**Claims**

1. A phase error detector for a QAM receiver in which all occurring QAM signal states are stored and, in this process, each of the QAM signal states lying in a complex signal state plane is surrounded by a decider zone and the phase error detector detects by threshold value decisions into which decider zone a complex received signal state broken down into its in-phase (ZI) and its quadrature phase signal components (ZQ) falls and forms a phase correction signal (S) for the carrier phase of the received signal (ES) in dependence on the detected decider zone, **characterised in that**

- the phase error detector (PFD) calculates the phase correction signal (S) in dependence on the detected decider zone in accordance with one of the following methods:

$$S1 = FQ \; f \; (ZI) - FI \; f \; (ZQ)$$

$$S2 = \pm 2 \; FQ \; f \; (ZI)$$

$$S3 = \pm 2 \; FI \; f \; (ZQ)$$

$$S4 = \pm 2 \; ZI \; ZQ$$

$$S5 = 0,$$

where ZI and ZQ are the in-phase and quadrature phase signal components of the received signal state and FI and FQ are the deviations of ZI and ZQ with respect to the in-phase and quadrature phase components of the decided QAM signal state;
- and the phase error detector (PFD) makes an association between the decider zones and the individual calculation methods (S 1 to S5) such that its static phase characteristic has no further zero position except for the coupling point in which the phase position between the reference carrier of the receiver and the received signal carrier is 0.

2. A phase error detector in accordance with claim 1, **characterised in that** f(ZI) = ZI and f(ZQ) = ZQ applies to the calculation methods (S1 to S3).

3. A phase error detector in accordance with claim 1, **characterised in that** f (ZI) = sign (ZI) und f (ZQ) = sign (ZQ) applies to the calculation methods S1 to S5.

**Revendications**

1. Détecteur d'erreur de phase pour un récepteur à modulation d'amplitude en quadrature de phase QAM, dans lequel tous les états de signaux QAM entrants sont mémorisés, chacun des états de signaux QAM situés dans un plan d'état de signal complexe est alors entouré par une zone de décideur, le détecteur d'erreur de phase détecte à l'aide de décisions à valeur de seuil dans quelle zone de décideur de quel état de signal QAM tombe un état de signal reçu complexe décomposé en une composante de signal en phase (ZI) et une composante de signal en quadrature (ZQ), et il forme en fonction de la zone de décideur détectée un signal de correction de phase (S) pour la phase porteuse du signal reçu (ES), **caractérisé par le fait que** :

   - le détecteur d'erreur de phase (PFD) calcule le signal de correction de phase (S) selon la zone de décideur détectée avec l'une des méthodes suivantes :

$$S1 = FQ \ f \ (ZI) - FI \ f \ (ZQ)$$

$$S2 = \pm \ 2 \ FQ \ f \ (ZI)$$

$$S3 = \pm \ 2 \ FI \ f \ (ZQ)$$

$$S4 = \pm \ 2 \ ZI \ ZQ$$

$$S5 = 0,$$

   ZI et ZQ étant les composantes de signal respectivement en phase et en quadrature de l'état de signal reçu et FI et FQ étant les décalages de ZI et ZQ par rapport aux composantes respectivement en phase et en quadrature de l'état de signal QAM décidé,
   - et le détecteur d'erreur de phase (PFD) effectue une telle association entre les zones de décideur et les différentes méthodes de calcul (S1 à S5) que sa courbe caractéristique de phase statique ne comporte pas d'autre point nul en dehors du point d'accrochage dans lequel le décalage de phase entre la porteuse de référence du récepteur et la porteuse de signal reçu est 0.

2. Détecteur d'erreur de phase selon la revendication 1, **caractérisé par le fait que**, pour les méthodes de calcul (S1 à S3), on a : f (ZI) = ZI et f (ZQ) = ZQ.

3. Détecteur d'erreur de phase selon la revendication 1, **caractérisé par le fait que**, pour les méthodes de calcul (S1 à S5), on a : f (ZI) = sign (ZI) et f (ZQ) = sign (ZQ).

FIG. 1

FIG. 2

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3619744 A1

**In der Beschreibung aufgeführte Nicht-Patentliteratur**

- **VON M. H. W. HOFFMANN.** *A new carrier regeneration scheme for QAM signals,* 07. Juni 1988, 599-602